# EUROPEAN PATENT SPECIFICATION

(11) **EP 2 073 114 B1**
(45) Date of publication and mention of the grant of the patent: **30.08.2017**
(21) Application number: 07150310.6
(22) Date of filing: 21.12.2007
(51) Int. Cl.: G06F 3/048, G06F 3/023

(54) **Context sensitive user interface**
Kontextabhängige Benutzeroberfläche
Interface d'utilisateur sensible au contexte

(43) Date of publication of application: 24.06.2009
(73) Proprietor: Idean Enterprises Oy, 02150 Espoo (FI)
(72) Inventor: Kallio, Markus Erik, FI-02610, Espoo (FI); Lähdesmäki, Risto Tapani, FI-02130, Espoo (FI); Vänskä, Marko, FI-01100, Itäsalmi (FI)
(74) Representative: Papula Oy

(56) References cited:
- WO-A-2006/003087
- WO-A-2006/096501
- US-B1- 6 597 384
- US-B1- 7 190 351

## Description

### FIELD OF THE INVENTION

The invention relates to computing devices having a user interface that can be used in different orientations.

### BACKGROUND OF THE INVENTION

Recently, the functions in mobile telephones, personal digital assistants and similar devices have increased remarkably. These devices are equipped with, for example, packet switched data communication networks, color displays, cameras, GPS-receivers and music players. The computing power of these devices has increased enormously. Thus, these devices are capable of executing complicated tasks. For example, a navigation software is a good example of an application indicating the capabilities of modern devices. In a navigation software, the device acquires the location of the device and computes a route to the desired destination. The desired destination is typically shown on a map that is displayed on the color display. Furthermore, the device is capable of giving voice instructions to the driver. Document US6597384B1 discloses a device where the direction of the device (portrait/landscape) is sensed using sensors, and the image of the screen is automatically rotated.

Document WO2006/096501A1 describes a handheld electronic device that offers a one-handed mode of operation and a two-handed mode of operation.

Document WO2006/003087A1 discloses a pinyin syllable input technique based on entering the first and last letters of the syllable.

Document US7190351B1 discloses a device with one-handed mode and two handed mode, and displaying two different types of virtual buttons for text input. In some applications, the orientation of the device changes. For example, when the camera of the device is used, the user of the device decides if he/she wants to take horizontal or vertical pictures. Then the user grabs the device accordingly and takes the picture. Some of the devices are equipped with sensors so that they actually know their orientation. For example, the camera application may have additional information on the display, such as menus. Typically, this additional information is adapted so that the text is readable when the user is taking horizontal pictures.

In some applications, the device is adapted to turn the display depending on how the device grabbed. The orientation can be detected by using sensors or, for example, monitoring how the device is grabbed or which application is opened. The applications may, and typically do have different orientations as the need for the display type varies. In these applications, the functionality assigned to the buttons may be changed so that they can better meet the needs of the application. If the device comprises a touch screen, then also the location of the buttons may be changed.

Although the user interfaces have developed enormously during past years, there are still a lot of opportunities for improvements. These improvements enable new applications and new ways of using the present ones. The user experience may be enhanced by providing user interfaces that are easier and more efficient to use in different environments.

### SUMMARY

The present invention is defined by the appended claims. The present invention discloses an enhanced method and system for providing a context-sensitive user interface for portable computing devices. The method according to the present invention for adapting a user interface in a computing device comprises determining the user interface mode of the device and selecting a user interface for a software application based on the determined user interface mode. In an embodiment the method further comprises monitoring the orientation of the device and selecting an user interface for the software application when the orientation of the device has changed. In a further embodiment the method further comprises detecting user interface mode from the fingers used to control the user interface in a touch sensitive display. For example, it is possible to detect if two fingers are used and if both of these fingers are thumbs. In addition to thumbs also other fingers, nails, pointing device or similar can be determined. Fingers are identified by the shape of the touch or by other means provided by the device. Based on the orientation, finger information and other possible detection means, such as manual selection, it is possible to determine user interface mode, wherein the mode comprises both the visualization and the input method of the user interface. It is possible to combine this information so that, for example, the orientation information is used for visualization and finger information for input method. Also other combinations are possible. For example, in an embodiment the vibration of the device may be taken into account. For example, if the user of the device is walking, the buttons, fonts and other items in the user interface may be shown larger as it is harder to use small fonts when walking. The number of the user interface modes is not limited but varies depending on the application. In typical cases there are 3 - 5 different user interface modes.

In an embodiment, the application used is a predictive text input application that is used with a touch-sensitive display. In an embodiment of the invention, the application first displays a first set of alphabet for choosing the first letter of the desired word and then displays a second set of alphabet for choosing the last letter of the desired word.

In a further embodiment, the application further displays a third set of alphabet for choosing at least a third letter. Then the application displays a list of words based on the chosen letters. The list may be displayed already when choosing the letters. In an embodiment, the application displays the sets under the list when the user interface is in a one hand mode, and on each side of the list when the user interface is in a two hands mode.

In a preferred embodiment, the invention is implemented as a software component in a device comprising an adaptive user interface on a display and sensors for determining the orientation of the device. The software component may be a computer program product that is embodied on a computer-readable medium. Typically, the display is a touch-sensitive display. The device and computer program are configured to execute the functionality of the method described above.

The advantage of the invention is a better user experience. For example, when the device can be used in the one hand mode or two hands mode, the present invention allows the user to choose the input mode and visualization by grabbing the device in the desired orientation or with desired fingers. A further advantage of the invention is that it provides a fluent transition from one mode to another and vice versa. For example, if the user of the device is travelling on a bus or other public transportation vehicle, it is possible that the user first needs to stand in the bus and only later can sit down when empty seats become available. In these cases, the user typically uses the one hand mode when standing, as the other hand is needed for holding. The user changes to the two hands mode when he sits down, as there is no need for holding and the two hands mode is more convenient. The change of the user interface mode is triggered by changing the orientation of the device.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a flow chart of the method according to the present invention,
**Fig. 2** is a flow chart of an example application using the method according to the present invention, and
**Fig. 3** is an illustration of the example application presented in Figure 2.

### DETAILED DESCRIPTION OF THE INVENTION

Reference will now be made in detail to the embodiments of the present invention, examples of which are illustrated in the accompanying drawings.

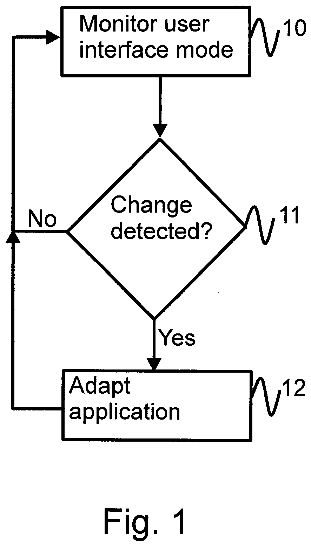

Figure 1 discloses a flow chart of the method according to the present invention. In the method, a context-sensitive user interface is implemented in a device comprising orientation sensors and touch sensitive display. The user interface is configured to monitor the user interface mode of the device, step 10. This monitoring may be implemented in the user interface itself, or it can be, for example, a hardware implementation or an operating system service. The monitoring process then detects a possible change in the user interface mode, step 11. If there is no change, the process is continued in step 10. If a change in the user interface mode is detected, the applications are adapted to a new orientation, step 12. Monitored parameters may be, for example, the orientation of the device, fingers used for controlling the device, a pointing device used for controlling the device or similar. If fingers are used, it is possible to detect which finger, how many fingers and which part of the finger. The part of the finger may be, for example, a nail or a tip of the one or more fingers.

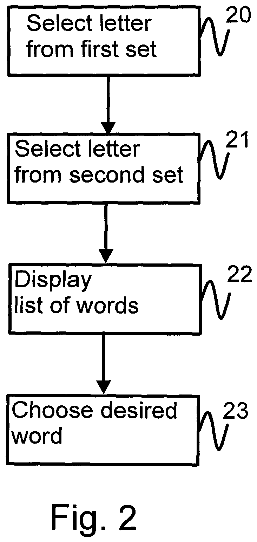

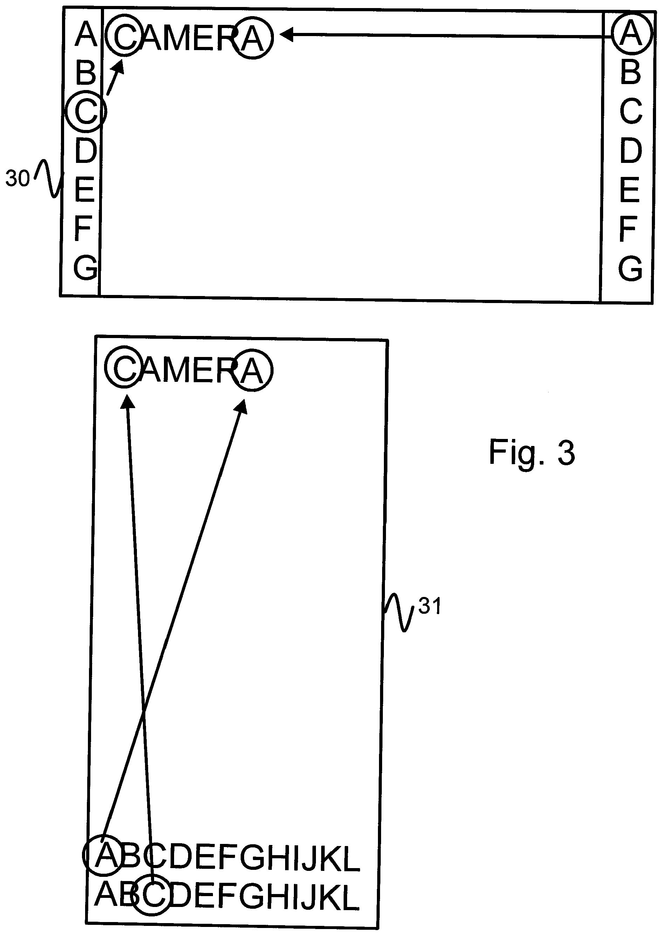

Figure 2 discloses a flow chart of an example application using the method described above. The example application for the context-sensitive user interface is a predictive text input application. These applications are popular in mobile devices. A better understanding can be achieved when Figure 2 is discussed together with Figure 3, which discloses an illustration of the application.

The method according to Figure 2 is initiated by choosing the first letter of the desired word. In the example of Figure 3, this word is "camera". Thus, letter "c" is chosen from the first set of alphabet, step 20. On display 30, the first set is on the left side of the display. On display 31, the first set is in the lower row of the illustration. These two are only examples and the sets can also be positioned differently. The method is continued by choosing the last letter of the desired word from the second set, step 21. On display 30, the second set is on the right side of the display. On display 31, the second set is in the upper row. Then a list of words is shown to the user of the device, step 22. Finally, the user chooses the desired word, step 23.

In the present embodiment, only two letters are chosen, however, it is possible to implement embodiments in which third and fourth letters are chosen as well. For example, the application can be implemented so that it will request letters as long as needed in order to fit the complete list of the possible words on the display, or there may be a certain threshold, for example of twenty words. The words can be organized alphabetically or in the order of use so that, for example, the words that the user commonly uses are shown on top.

In Figure 3, display 30 is in the two hands mode and display 31 is in the one hand mode. In this application, it means that in display 30, the user holds the device comprising the display so that the left hand can be used for the left column of the alphabet and the right hand for the right column of the alphabet. This is convenient when both hands are available for typing. The one hand mode illustrated in display 31 has two rows of alphabet so that both of the rows can be easily used by one hand. This is convenient when both hands are not available for typing. Both of the modes are implemented into the application, so that, when the user wishes to change between the modes, it can be done, for example, by changing the orientation of the device or grabbing the device with different fingers. However, the modes can be changed also by other means, for example, by choosing from a menu or button.

The orientation may be used to change the visualization and the input mode of the device, however, it is also possible to detect fingers used for controlling the user interface and ignore the orientation. For example, if the user grabs the display 30 by only one hand without changing the orientation, it can be adapted so that the visualization is still in accordance with the previous orientation but the sets of alphabet are shown in the bottom as in the display 31, or vice versa. The text input application disclosed in Figure 3 can be implemented also in devices that do not have touch sensitive display but a limited keypad. However, in that case the user interface mode cannot be chosen based on finger information.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for adapting a user interface in a computing device with a touch-sensitive display comprising:
determining the user interface mode of the device; and
selecting a user interface for a software application based on said determined user interface mode;
wherein the method further comprises monitoring the user interface mode of the device and selecting a new user interface for said software application when the user interface mode of said device has changed, wherein said user interface modes comprises one hand mode and two hand mode,
wherein said application is a predictive text input application and
**characterised in that**
the method further comprises displaying a first set of letters for choosing the first letter of the desired word, and displaying a second set of letters for choosing the last letter of the desired word, and displaying a list of words based on the chosen letters, and
wherein said sets are displayed under said list when said user interface is in the one hand mode, and said sets are displayed on each side of said list when said user interface is in the two hand mode.

2. The method according to claim 1, wherein the user interface mode is determined from at least one of following: the orientation of the device, a controlling device, the fingers used for controlling the interface and the part of the finger used for controlling the interface.

3. The method according to claim 1, wherein the method further comprises displaying a third set of letters for choosing at least a third letter.

4. A device comprising an adaptive user interface on a touch sensitive display and sensors for determining the orientation of the device, wherein the device is further configured to:
determine the user interface mode of the device; and
select a user interface for a software application based on said determined user interface mode;
wherein the device is further configured to monitor the user interface mode of the device and select a new user interface for said software application when the user interface mode of said device has changed, wherein said user interface modes comprises one hand mode and two hand mode, wherein said application is a predictive text input application, and **characterised in that** the device is further configured to display a first set of letters for choosing the first letter of the desired word, and to display a second set of letters for choosing the last letter of the desired word, and to display a list of words based on the chosen letters, and
wherein the device is configured to display said sets under said list when said user interface is in the one hand mode, and to display said sets on each side of said list when said user interface is in the two hands mode.

5. The device according to claim 4, wherein the device is configure to determine said user interface mode from at least one of following: the orientation of the device, a controlling device, the fingers used for controlling the interface and the part of the finger used for controlling the interface.

6. The device according to claim 4, wherein the device is further configured to display a third set of letters for choosing at least a third letter.

7. A computer program product for adapting a user interface in a computing device with a touch sensitive display, wherein the computer program product is configured to perform the following steps when executed in a computing device:
determining the user interface mode of the device; and
selecting a user interface for a software application based on said determined user interface mode;
wherein the method further comprises monitoring the user interface mode of the device and selecting a new user interface for said software application when the user interface mode of said device has changed, wherein said user interface modes comprises one hand mode and two hand mode,
wherein said application is a predictive text input application, and **characterised in that**
the computer program product is further configured to perform the steps of displaying a first set of letters for choosing the first letter of the desired word, and displaying a second set of letters for choosing the last letter of the desired word, and displaying a list of words based on the chosen letters, and
wherein said sets are displayed under said list when said user interface is in the one hand mode, and said sets are displayed on each side of said list when said user interface is in the two hands mode.

8. The computer program product according to claim 7, wherein computer program product is further configured to determine the user interface mode from at least one of following: the orientation of the device, a controlling device, the fingers used for controlling the interface and the part of the finger used for controlling the interface.

9. The computer program product according to claim 7, wherein the computer program product is further configured to perform the step of displaying a third set of letters for choosing at least a third letter.

## Patentansprüche

1. Verfahren zum Anpassen einer Benutzeroberfläche in einer Rechnervorrichtung mit einer berührungsempfindlichen Anzeige, das Folgendes umfasst:
Bestimmen des Benutzeroberflächenmodus der Vorrichtung; und
Auswählen einer Benutzeroberfläche für eine Softwareanwendung basierend auf dem bestimmten Benutzeroberflächenmodus;
wobei das Verfahren ferner Überwachen des Benutzeroberflächenmodus der Vorrichtung und Auswählen einer neuen Benutzeroberfläche für die Softwareanwendung, wenn sich der Benutzeroberflächenmodus der Vorrichtung verändert hat, umfasst, wobei der Benutzeroberflächenmodus einen Einhandmodus und einen Zweihandmodus umfasst,
wobei die Anwendung eine Wortvervollständigungsanwendung ist, und
**dadurch gekennzeichnet, dass**
das Verfahren ferner Anzeigen einer ersten Menge an Buchstaben zum Auswählen des ersten Buchstabens des gewünschten Wortes und Anzeigen einer zweiten Menge an Buchstaben zum Auswählen des letzten Buchstabens des gewünschten Wortes und Anzeigen einer Liste von Wörtern basierend auf den ausgewählten Buchstaben umfasst, und wobei die Mengen unter der Liste angezeigt werden, wenn sich die Benutzeroberfläche in dem Einhandmodus befindet, und wobei die Mengen auf jeder Seite der Liste angezeigt werden, wenn sich die Benutzeroberfläche in dem Zweihandmodus befindet.

2. Verfahren nach Anspruch 1, wobei der Benutzeroberflächenmodus aus wenigstens einem von Folgendem bestimmt wird: der Orientierung der Vorrichtung, einer Steuervorrichtung, den Fingern, die zum Steuern der Oberfläche verwendet werden, und dem Teil des Fingers, der zum Steuern der Oberfläche verwendet wird.

3. Verfahren nach Anspruch 1, wobei das Verfahren ferner Anzeigen einer dritten Menge an Buchstaben zum Auswählen von wenigstens einem dritten Buchstaben umfasst.

4. Vorrichtung, die eine anpassungsfähige Benutzeroberfläche auf einem berührungsempfindlichen Bildschirm und Sensoren zum Bestimmen der Orientierung der Vorrichtung umfasst, wobei die Vorrichtung ferner zu Folgendem konfiguriert ist:
Bestimmen des Benutzeroberflächenmodus der Vorrichtung; und
Auswählen einer Benutzeroberfläche für eine Softwareanwendung basierend auf dem bestimmten Benutzeroberflächenmodus;
wobei die Vorrichtung ferner zum Überwachen des Benutzeroberflächenmodus der Vorrichtung und zum Auswählen einer neuen Benutzeroberfläche für die Softwareanwendung, wenn sich der Benutzeroberflächenmodus der Vorrichtung verändert hat, konfiguriert ist, wobei der Benutzeroberflächenmodus einen Einhandmodus und einen Zweihandmodus umfasst, wobei die Anwendung eine Wortvervollständigungsanwendung ist, und
**dadurch gekennzeichnet, dass**
die Vorrichtung ferner zum Anzeigen einer ersten Menge an Buchstaben zum Auswählen des ersten Buchstabens des gewünschten Wortes und zum Anzeigen einer zweiten Menge an Buchstaben zum Auswählen des letzten Buchstabens des gewünschten Wortes und zum Anzeigen einer Liste von Wörtern basierend auf den ausgewählten Buchstaben konfiguriert ist, und
wobei die Vorrichtung zum Anzeigen der Mengen unter der Liste, wenn sich die Benutzeroberfläche in dem Einhandmodus befindet, und zum Anzeigen der Mengen auf jeder Seite der Liste, wenn sich die Benutzeroberfläche in dem Zweihandmodus befindet, konfiguriert ist.

5. Vorrichtung nach Anspruch 4, wobei die Vorrichtung zum Bestimmen des Benutzeroberflächenmodus aus wenigstens einem von Folgendem konfiguriert ist: der Orientierung der Vorrichtung, einer Steuervorrichtung, den Fingern, die zum Steuern der Oberfläche verwendet werden, und dem Teil des Fingers, der zum Steuern der Oberfläche verwendet wird.

6. Vorrichtung nach Anspruch 4, wobei die Vorrichtung ferner zum Anzeigen einer dritten Menge an Buchstaben zum Auswählen von wenigstens einem dritten Buchstaben konfiguriert ist.

7. Computerprogrammprodukt zum Anpassen einer Benutzeroberfläche in einer Rechnervorrichtung mit einer berührungsempfindlichen Anzeige, wobei das Computerprogrammprodukt zum Durchführen der folgenden Schritte, wenn es in einer Rechnervorrichtung ausgeführt wird, konfiguriert ist:
Bestimmen des Benutzeroberflächenmodus der Vorrichtung; und
Auswählen einer Benutzeroberfläche für eine Softwareanwendung basierend auf dem bestimmten Benutzeroberflächenmodus;
wobei das Verfahren ferner Überwachen des Benutzeroberflächenmodus der Vorrichtung und Auswählen einer neuen Benutzeroberfläche für die Softwareanwendung, wenn sich der Benutzeroberflächenmodus der Vorrichtung verändert hat, umfasst, wobei der Benutzeroberflächenmodus einen Einhandmodus und einen Zweihandmodus umfasst,
wobei die Anwendung eine Wortvervollständigungsanwendung ist, und
**dadurch gekennzeichnet, dass**
das Computerprogrammprodukt ferner zum Durchführen der Schritte des Anzeigens einer ersten Menge an Buchstaben zum Auswählen des ersten Buchstabens des gewünschten Wortes und des Anzeigens einer zweiten Menge an Buchstaben zum Auswählen des letzten Buchstabens des gewünschten Wortes und des Anzeigens einer Liste von Wörtern basierend auf den ausgewählten Buchstaben konfiguriert ist, und
wobei die Mengen unter der Liste angezeigt werden, wenn sich die Benutzeroberfläche in dem Einhandmodus befindet, und wobei die Mengen auf jeder Seite der Liste angezeigt werden, wenn sich die Benutzeroberfläche in dem Zweihandmodus befindet.

8. Computerprogrammprodukt nach Anspruch 7, wobei das Computerprogrammprodukt ferner zum Bestimmen des Benutzeroberflächenmodus aus wenigstens einem von Folgendem konfiguriert ist: der Orientierung der Vorrichtung, einer Steuervorrichtung, den Fingern, die zum Steuern der Oberfläche verwendet werden, und dem Teil des Fingers, der zum Steuern der Oberfläche verwendet wird.

9. Computerprogrammprodukt nach Anspruch 7, wobei das Computerprogrammprodukt ferner zum Durchführen des Schrittes des Anzeigens einer dritten Menge an Buchstaben zum Auswählen von wenigstens einem dritten Buchstaben konfiguriert ist.

## Revendications

1. Procédé d'adaptation d'une interface utilisateur dans un dispositif informatique avec un écran d'affichage tactile, comprenant les étapes ci-dessous consistant à :
déterminer le mode d'interface utilisateur du dispositif ; et
sélectionner une interface utilisateur pour une application logicielle sur la base dudit mode d'interface utilisateur déterminé ;
dans lequel le procédé comporte en outre l'étape consistant à surveiller le mode d'interface utilisateur du dispositif et à sélectionner une nouvelle interface utilisateur pour ladite application logicielle lorsque le mode d'interface utilisateur dudit dispositif a été modifié, dans lequel lesdites modes d'interface utilisateur comportent un mode à une seule main et un mode à deux mains ;
dans lequel ladite application est une application de saisie de texte prédictive ; et
**caractérisé en ce que** le procédé comporte en outre l'étape consistant à afficher un premier ensemble de lettres pour choisir la première lettre du mot souhaité, à afficher un deuxième ensemble de lettres pour choisir la dernière lettre du mot souhaité, et à afficher une liste de mots sur la base des lettres choisies ; et
dans lequel lesdits ensembles sont affichés sous ladite liste lorsque ladite interface utilisateur est dans le mode à une seule main, et lesdits ensembles sont affichés de chaque côté de ladite liste lorsque ladite interface utilisateur est dans le mode à deux mains.

2. Procédé selon la revendication 1, dans lequel le mode d'interface utilisateur est déterminé à partir d'au moins l'un des éléments suivants : l'orientation du dispositif, un dispositif de commande, les doigts utilisés pour commander l'interface, et la partie du doigt utilisée pour commander l'interface.

3. Procédé selon la revendication 1, dans lequel le procédé comporte en outre l'étape consistant à afficher un troisième ensemble de lettres pour choisir au moins une troisième lettre.

4. Dispositif comportant une interface utilisateur adaptative sur un écran d'affichage tactile et des capteurs pour déterminer l'orientation du dispositif, dans lequel le dispositif est en outre configuré de manière à :
déterminer le mode d'interface utilisateur du dispositif ; et
sélectionner une interface utilisateur pour une application logicielle sur la base dudit mode d'interface utilisateur déterminé ;
dans lequel le dispositif est en outre configuré de manière à surveiller le mode d'interface utilisateur du dispositif et à sélectionner une nouvelle interface utilisateur pour ladite application logicielle lorsque le mode d'interface utilisateur dudit dispositif a été modifié, dans lequel lesdites modes d'interface utilisateur comportent un mode à une seule main et un mode à deux mains, dans lequel ladite application est une application de saisie de texte prédictive ; et
**caractérisé en ce que** le dispositif est en outre configuré de manière à afficher un premier ensemble de lettres pour choisir la première lettre du mot souhaité, à afficher un deuxième ensemble de lettres pour choisir la dernière lettre du mot souhaité, et à afficher une liste de mots sur la base des lettres choisies ; et
dans lequel le dispositif est configuré de manière à afficher lesdits ensembles sous ladite liste lorsque ladite interface utilisateur est dans le mode à une seule main, et à afficher lesdits ensembles de chaque côté de ladite liste lorsque ladite interface utilisateur est dans le mode à deux mains.

5. Dispositif selon la revendication 4, dans lequel le dispositif est configuré de manière à déterminer ledit mode d'interface utilisateur à partir d'au moins l'un des éléments suivants : l'orientation du dispositif, un dispositif de commande, les doigts utilisés pour commander l'interface, et la partie du doigt utilisée pour commander l'interface.

6. Dispositif selon la revendication 4, dans lequel le dispositif est en outre configuré de manière à afficher un troisième ensemble de lettres pour choisir au moins une troisième lettre.

7. Produit-programme informatique destiné à adapter une interface utilisateur dans un dispositif informatique avec un écran d'affichage tactile, dans lequel le produit-programme informatique est configuré de manière à mettre en oeuvre les étapes suivantes lorsqu'il est exécuté dans un dispositif informatique :
déterminer le mode d'interface utilisateur du dispositif ; et
sélectionner une interface utilisateur pour une application logicielle sur la base dudit mode d'interface utilisateur déterminé ;
dans lequel le procédé comporte en outre l'étape consistant à surveiller le mode d'interface utilisateur du dispositif et à sélectionner une nouvelle interface utilisateur pour ladite application logicielle lorsque le mode d'interface utilisateur dudit dispositif a été modifié, dans lequel lesdites modes d'interface utilisateur comportent un mode à une seule main et un mode à deux mains ;
dans lequel ladite application est une application de saisie de texte prédictive ; et
**caractérisé en ce que** le produit-programme informatique est en outre configuré de manière à mettre en oeuvre les étapes consistant à afficher un premier ensemble de lettres pour choisir la première lettre du mot souhaité, à afficher un deuxième ensemble de lettres pour choisir la dernière lettre du mot souhaité, et à afficher une liste de mots sur la base des lettres choisies ; et
dans lequel lesdits ensembles sont affichés sous ladite liste lorsque ladite interface utilisateur est dans le mode à une seule main, et lesdits ensembles sont affichés de chaque côté de ladite liste lorsque ladite interface utilisateur est dans le mode à deux mains.

8. Produit-programme informatique selon la revendication 7, dans lequel le produit-programme informatique est en outre configuré de manière à déterminer le mode d'interface utilisateur à partir d'au moins l'un des éléments suivants : l'orientation du dispositif, un dispositif de commande, les doigts utilisés pour commander l'interface, et la partie du doigt utilisée pour commander l'interface.

9. Produit-programme informatique selon la revendication 7, dans lequel le produit-programme informatique est en outre configuré de manière à mettre en oeuvre l'étape consistant à afficher un troisième ensemble de lettres pour choisir au moins une troisième lettre.
